# EUROPEAN PATENT SPECIFICATION

(11) **EP 2 847 034 B1**
(45) Date of publication and mention of the grant of the patent: **11.09.2019**
(21) Application number: 13724130.3
(22) Date of filing: 09.05.2013
(51) Int. Cl.: B60N 2/28

(54) **HARNESS GUARD SAFETY SYSTEM**
GURTSCHUTZ-SISCHERHEITSSYSTEM
SYSTÈME DE SÉCURITÉ DE PROTECTION D'UN HARNAIS

(30) Priority: 09.05.2012 US 201261644862 P; 09.05.2012 US 201261644893 P
(43) Date of publication of application: 18.03.2015
(73) Proprietor: Britax Child Safety Inc., Charlotte, NC 28273 (US)
(72) Inventor: DASENT, Marlon G., Charlotte, North Carolina 28277 (US); FRANCK, Christopher G., Fort Mill, South Carolina 29707 (US); STRONG, Lynn Curtis, Rock Hill, South Carolina 29730 (US); MASON, Grant, Indian Land, South Carolina 29707 (US)
(74) Representative: Bosch Jehle Patentanwaltsgesellschaft mbH
(86) International application number: PCT/US2013/040429
(87) International publication number: WO 2013/170088

(56) References cited:
- WO-A1-2005/120910
- CA-A- 1 012 050
- US-A- 4 342 483
- US-A1- 2005 173 956

## Description

### TECHNICAL FIELD

The present invention generally relates to the field of child safety seats, and more particularly, to a child safety seat including a harness guard safety system for safely securing an infant and/or child in a harness of a child safety seat, such as during a vehicle impact.

### BACKGROUND

Child safety seating products are designed to protect children in vehicles from the effects of impacts or other sudden changes in motions. Child safety seats, commonly referred to simply as car seats, may be used in a variety of vehicles with a variety of seating configurations. It is important for a child safety seat to securely retain an occupant and limit movement of that occupant, particularly during an impact. Typically, a child safety seat will include a harness assembly configured to secure the child to the child safety seat when a child occupies the child safety seat. During a vehicle impact, even when a child is properly secured within the child safety seat by the harness, the child may be subjected to forces from the impact that cause the child's body and/or head to lunge forward.

Document US 4 342 483 A describes a child safety seat for vehicles with an abdominal pad of polymeric foam which is united to the belt system by means of embedding the portions of the shoulder belts in the pelvic region and a portion of a buckle tongue within the foam material of the abdominal pad.

While the harness may prevent the child's body and/or head from moving too far during the impact, it may be desirable to further secure the child and prevent the child's body and head from moving too far or too fast during the impact. Accordingly, it would be desirable to produce a harness guard safety assembly that provides for improved protection of a secured child during a vehicle impact.

### BRIEF SUMMARY

This object is achieved by the child safety seat according to claim 1. Further advantageous embodiments of the present invention are indicated in claims 2 to 13.

Various embodiments of the present invention are directed to child safety seats that may reduce the likelihood of injury to an occupant of the seat resulting from an impact. In particular, embodiments of the present invention are directed to a harness assembly configured to restrain a child occupying the child safety seat.

According to the invention a child safety seat for securement to a vehicle is provided. The child safety seat comprises a child safety seat shell, a harness belt, and a harness guard. The harness guard is configured to receive a portion of the harness belt therethrough. The harness guard defines a padding configured to contact an occupant of the child safety seat and absorb energy resulting from a sudden deceleration of the vehicle. The harness guard may define a front surface, an interior surface, and a rear surface, wherein the rear surface defines the padding. In some embodiments, the padding defines a plurality of protrusions that extend from the rear surface of the harness guard. At least on protrusion may be spaced apart from at least a second protrusion.

In some embodiments, the harness guard is configured to remain in a position relative to the harness belt and the occupant of the child safety seat during sudden deceleration of the vehicle. The child safety seat may further comprise a tether webbing and a tether stop. The tether stop may be configured to secure the tether webbing to the harness guard.

In some embodiments, the child safety seat shell may define a seat portion configured to receive the occupant thereon, and a back portion extending upwardly from an edge of the seat portion. The back portion may define a front surface and a rear surface. The front surface may be configured to receive the occupant of the child safety seat. The tether webbing is secured to the rear surface of the back portion such that the harness guard is fixed in the position relative to the harness belt and the occupant of the child safety seat. In some embodiments, the child safety seat further comprises a second harness guard configured to receive a portion of the harness belt therethrough. The tether webbing is configured to extend through the back portion between the first harness guard and the second harness guard such that the first harness guard and the second harness guard are each fixed in the position relative to the harness belt and the occupant of the child safety seat.

According to some embodiments, the child safety seat may include a back portion of the child safety seat shell that further defines at least one shell slot configured to receive the harness belt and tether webbing therethrough. The tether webbing may further define at least one tether fold. The tether fold is disposed along the tether webbing at a position beyond the shell slot of the back portion of the child safety seat shell and opposite the harness guard. At least one tether fold may comprise a first portion of the tether webbing secured to at least a second portion of the tether webbing, the first portion and second portion of the tether webbing being secured by at least one rip stitch. The rip stitch may be configured to rip from interaction with the shell slot to absorb energy resulting during sudden deceleration of the vehicle.

According to some embodiments, the harness guard may define a harness guard tether slot, wherein the harness guard tether slot is configured to receive the tether webbing therethrough and prohibit the tether stop from moving through the harness guard tether slot.

In some embodiments, a child safety seat for securement to a vehicle is provided, the child safety seat comprising a child safety seat shell, a harness belt, a chest clip, and at least one harness guard. The at least one harness guard may be configured to receive a portion of the harness belt therethrough. In some embodiments, at least one harness guard defines at least one receiving feature that is configured to interact with the chest clip such that the at least one harness guard remains in a position relative to the harness belt and an occupant of the child safety seat during a sudden deceleration of the vehicle. The at least one harness guard may comprise a first harness guard and a second harness guard, and the chest clip may be configured to couple respective receiving features of the first harness guard and the second harness guard. In some embodiments, the first and second harness guard may each define at least one longitudinal edge, a front surface, an interior surface, and a rear surface, wherein the rear surface defines padding configured to contact an occupant of the child safety seat and absorb energy resulting from the sudden deceleration of the vehicle, and wherein the at least one longitudinal edge defines a plurality of receiving features, and wherein each receiving feature defines a channel configured to receive and bias the chest clip within the respective receiving feature.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 shows a perspective view of a child safety seat, according to an example embodiment of the present invention;
FIG. 2 shows a detailed view of harness guards of a harness guard safety system for a harness of the child safety seat shown in FIG. 1, according to an example embodiment of the present invention;
FIG. 3 shows a detailed view of the back of a harness guard and a harness belt shown in FIG. 2 revealing a tether webbing of the harness guard safety system, wherein the harness guard is shown in the tensioned position, according to an example embodiment of the present invention;
FIG. 4 shows a detailed view of the back of a harness guard and a harness belt shown in FIG. 3 revealing a tether webbing of the harness guard safety system, wherein the harness guard is shown in the un-tensioned position, according to an example embodiment of the present invention;
FIG. 5 shows a perspective view of the back of the child safety seat shown in FIG. 1, according to an example embodiment of the present invention;
FIG. 6 shows a detailed view of a portion of the back of the child safety seat shown in FIG. 5, wherein the tether webbing extends through the shell of the child safety seat and engages with a tab, according to an example embodiment of the present invention;
FIG. 7 shows a detailed view of a portion of the back of the child safety seat shown in FIG. 5, wherein the tether webbing extends through the shell of the child safety seat and is disposed from the tab, according to an example embodiment of the present invention;
FIG. 8A shows a detailed view of a harness guard in the untensioned position, according to an example embodiment of the present invention;
FIG. 8B shows a detailed view of a harness guard in the tensioned position, according to an example embodiment of the present invention;
FIG. 9 shows a detailed view of the tether webbing shown in FIG. 7, wherein two different portions of the tether webbing are each folded and stitched together, wherein the tether webbing is shown in the stitched configuration, according to an example embodiment of the present invention;
FIGs. 10A-10D illustrate ripping of the stitching of the tether webbing shown in FIG. 9 as a result of the force of a vehicle impact, according to an example embodiment of the present invention;
FIG. 11A shows a detailed view of the harness guard safety system in the untensioned position, according to an example embodiment of the present invention;
FIG. 11B shows a detailed view of the harness guard safety system in the tensioned position, according to an example embodiment of the present invention;
FIG. 12 shows a schematic of the tether, including a detail view of the tether stop show in FIG. 4 and the tether folds shown in FIG. 9, according to an example embodiment of the present invention;
FIG. 13 illustrates testing of child safety seats with and without example embodiments of the harness guard safety system in response to forces that may be applied on the child safety seats during a vehicle impact;

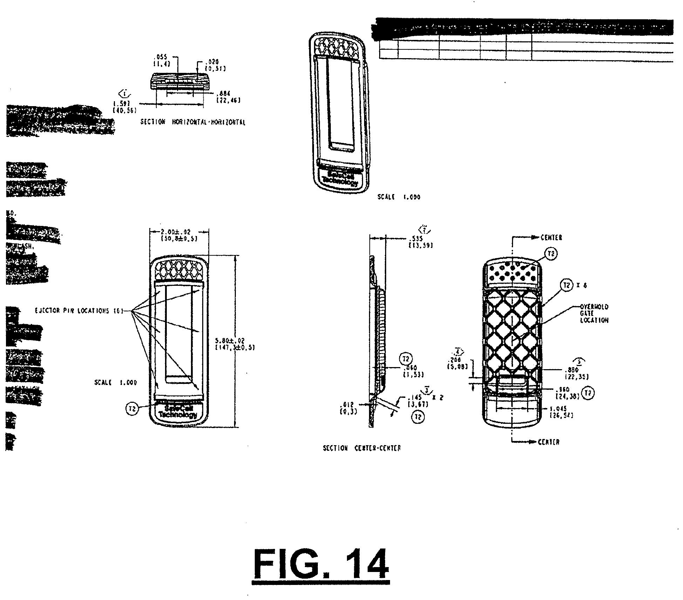

FIGs. 14-15 show a schematic of a harness guard, according to an example embodiment of the present invention;

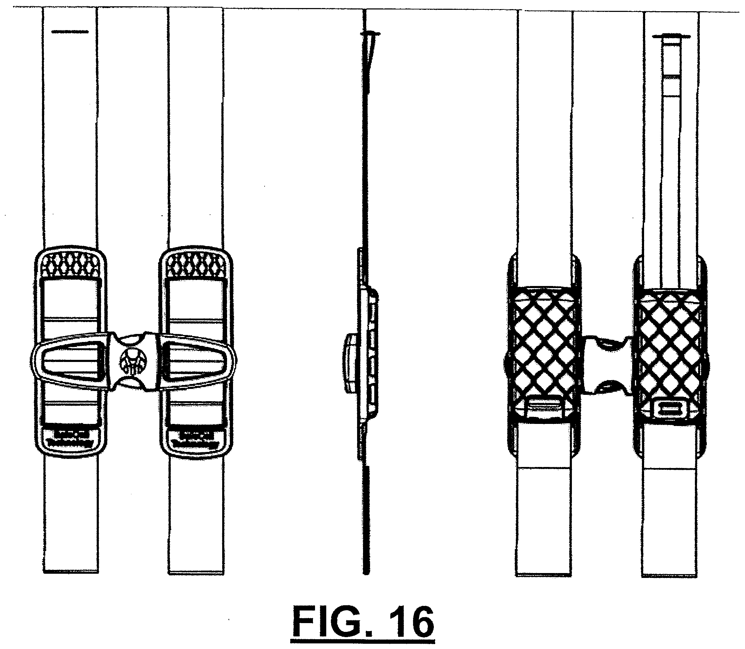

FIG. 16 illustrates an example harness with harness guard engaged, according to an example embodiment of the present invention;
FIG. 17A illustrates a front view of a harness guard according to an example embodiment of the present invention;
FIG. 17B illustrates a side view of a harness guard according to an example embodiment of the present invention;
FIG. 17C illustrates a rear view of a harness guard according to an example embodiment of the present invention;
FIG. 17D illustrates a perspective view of a harness guard according to an example embodiment of the present invention;
FIG. 18 illustrates a front view of a harness guard according to an example embodiment of the present invention;
FIG. 19 illustrates a perspective view of a child safety seat, according to an example embodiment of the present invention;
FIG. 20 illustrates a detailed view of a harness guard of a harness guard safety system according to an example embodiment of the present invention;
FIG. 21 illustrates a detailed view of a harness guard of a harness guard safety system according to an example embodiment of the present invention;
FIG. 22 illustrates a detailed view of a harness guard of a harness guard safety system according to an example embodiment of the present invention;
FIG. 23 illustrates a detailed rear view of a harness guard of a harness guard safety system according to an example embodiment of the present invention;
FIG. 24 illustrates a rear perspective view of a child safety seat according to an example embodiment of the present invention; and
FIG. 25 illustrates a rear view of a child safety seat according to an example embodiment of the present invention.

### DETAILED DESCRIPTION OF THE INVENTION

The present invention will now be described more fully hereinafter with reference to the accompanying drawings, in which some, but not all embodiments of the inventions are shown. Indeed, these inventions may be embodied in many different forms and should not be construed as limited to the embodiments set forth herein; rather, these embodiments are provided so that this disclosure will satisfy applicable legal requirements.

A child safety seat may be configured for installation in a forward-facing position to accommodate children in the appropriate position based on the height and weight of a child, such as according to the guidelines and standards of the United States National Highway Transportation Safety Administration (NHTSA) and similar authorities in other countries.

In addition, child safety seats are usually securely attached to a fixed location within the vehicle, such as in accordance with the international standard for attachment points for child safety seats, ISOFIX, or using LATCH (Lower Anchors and Tethers for Children) attachments in the U.S. Proper installation and use of a child safety seat within a vehicle is necessary to achieve the maximum protection afforded by the seat.

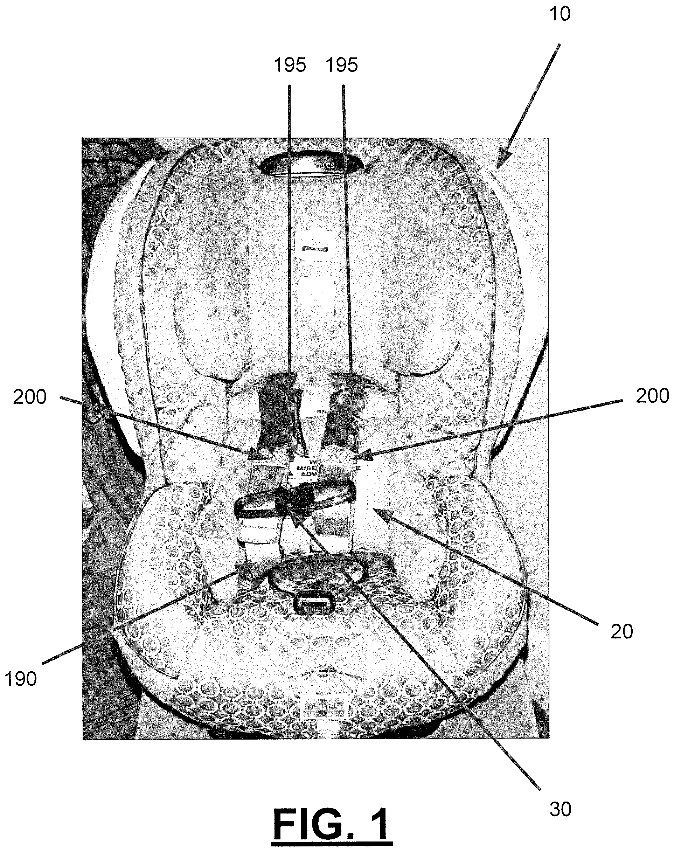

FIG. 1 illustrates an example child safety seat 10. A child (not shown) may be secured within the child safety seat 10 with a harness assembly 20. The type of harness used to secure a child may depend on the type of child safety seat or the jurisdiction in which the child safety seat is being used. As shown in FIG. 1, a five-point harness assembly is shown. The harness assembly 20 may include a harness belt 190, a chest clip 30, at least one harness guard 200, and/or at least one shoulder pad 195.

Child safety seats are designed to safely secure the child within the safety seat and prevent the child from being harmed during a sudden change in velocity of the vehicle, such as during a vehicle impact or collision. When the child safety seat is disposed in the forward facing configuration (shown in FIG. 1) and the child is secured by the harness, the child may likely undergo a force from the impact that causes the child's head and body to move forward suddenly. While the harness helps protect the child from moving forward too much, the harness still is designed with some extra give (or room), allowing the child's body and head to move forward a little during the impact.

Thus, during an impact, the child's body may accelerate forward within the extra room designed for the harness. Moreover, depending on the degree of the sudden change in velocity, the child may undergo a relatively large (and undesirable) amount of force from the acceleration during the impact. As such, in order to further improve child safety during a sudden change in velocity (e.g., deceleration of a vehicle), such as during a vehicle impact, embodiments of the present invention provide a harness guard safety system for a child safety seat.

Some example embodiments of the present invention will be described herein with reference to the attached figures and exhibits. The figures, exhibits, and corresponding descriptions, however, are provided as example embodiments, and are not meant to be limiting.

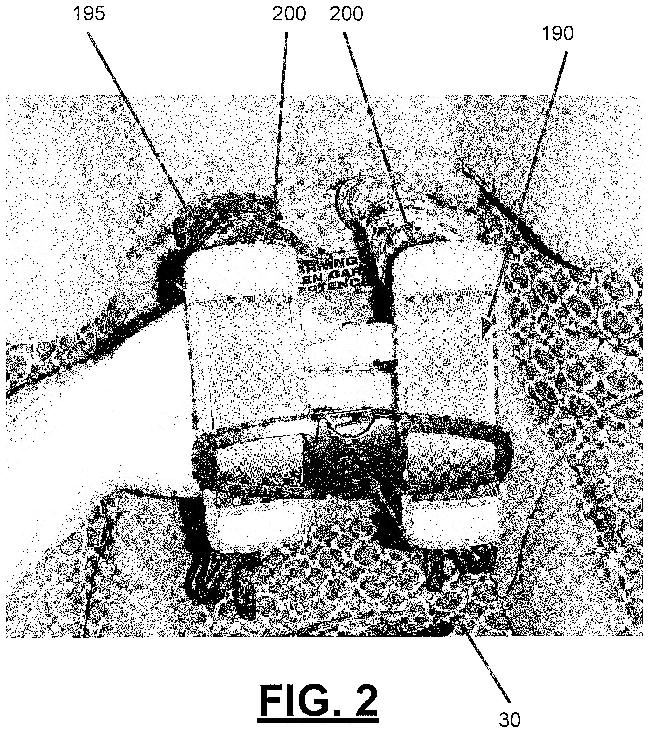

As noted above, the child safety seat in FIG. 1 includes a harness for securing a child within the safety seat. For example, the child may be placed within the harness and a number of buckles and clips (e.g., the chest clip 30) may be connected in order to secure the child. With reference to FIG. 2, the harness may include additional features for comfort of the child, such as shoulder pads 195.

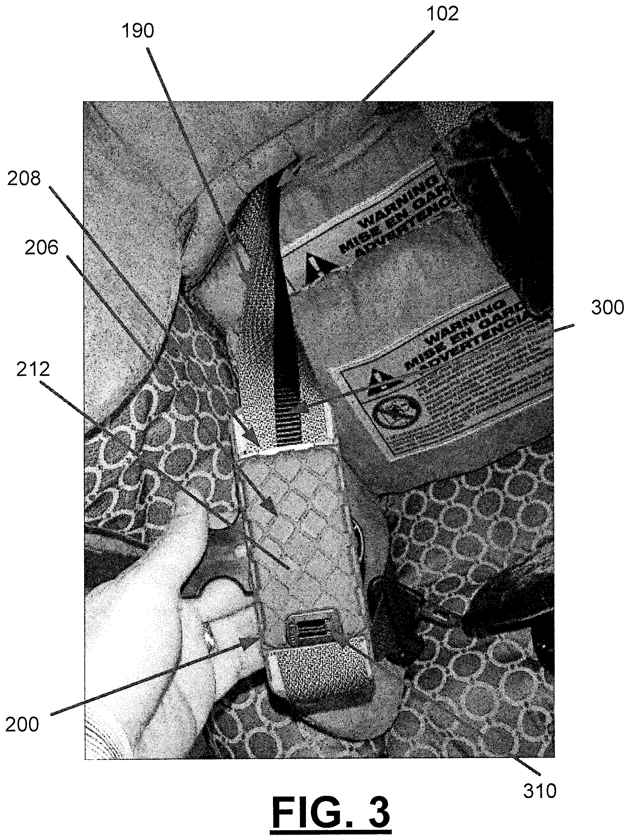

With further reference to FIG. 2, in some embodiments, the harness assembly may be engaged with one or more harness guards 200. As shown in FIG. 3, the harness guard 200 may be configured to receive a portion of the harness belt 190 (e.g., the seat belt of the harness) such that the harness guard 200 may slide along the harness belt. The harness guard 200 may be configured to rest against the shoulder and/or chest of the child to maintain the chest of the child at a proper position within the child safety seat, such as while riding in the vehicle or during an impact.

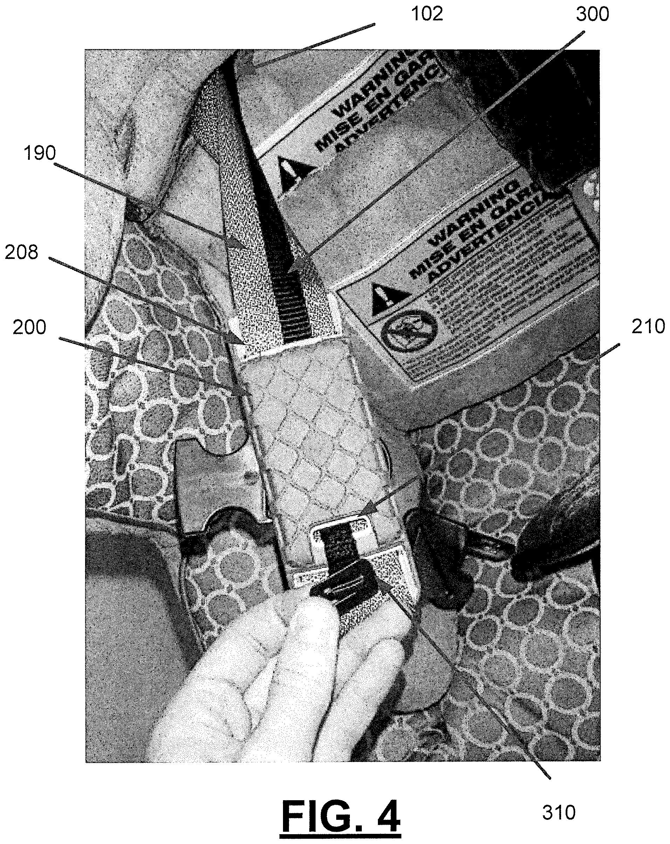

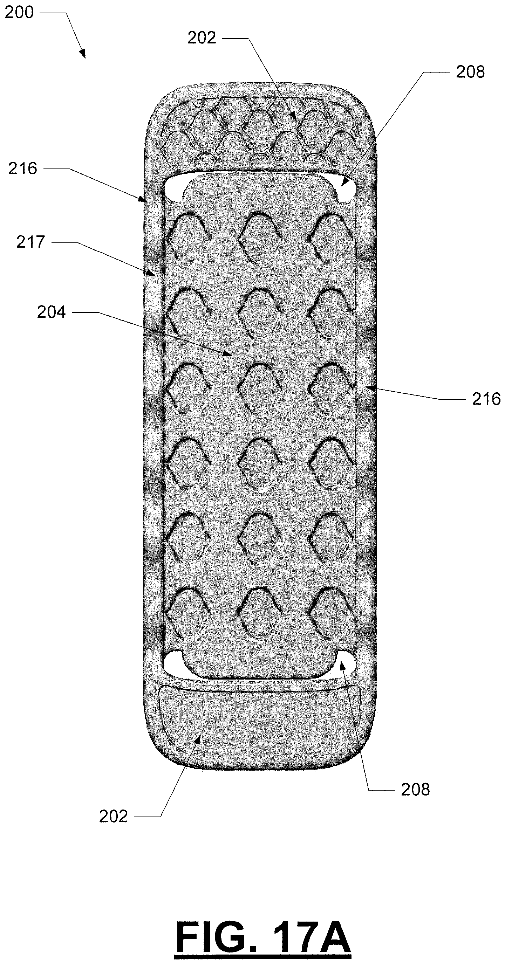

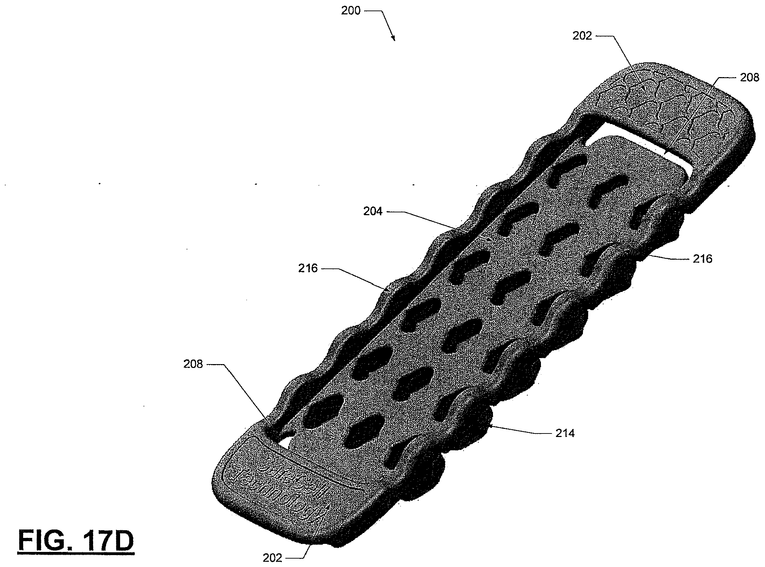

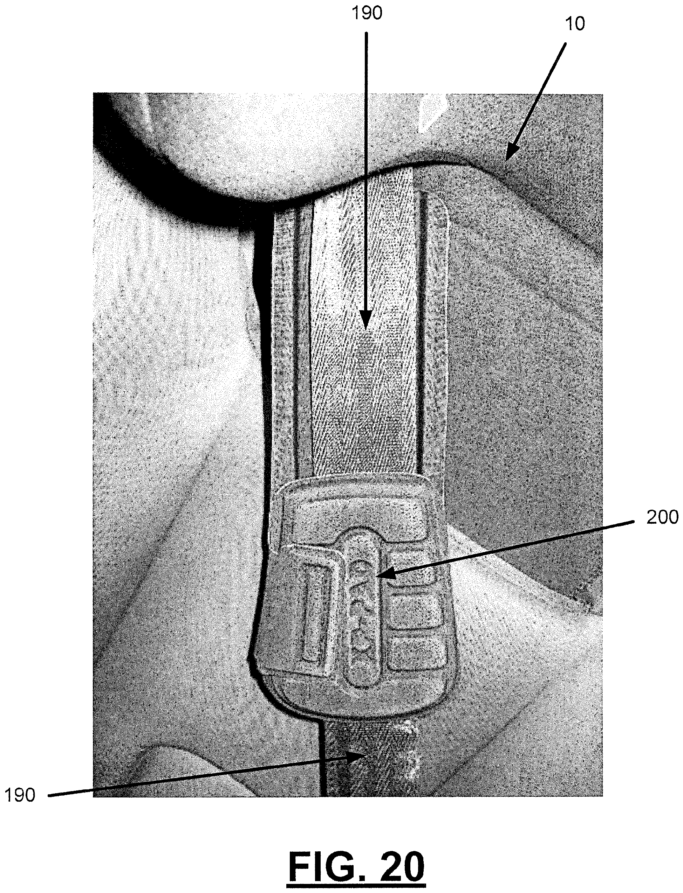

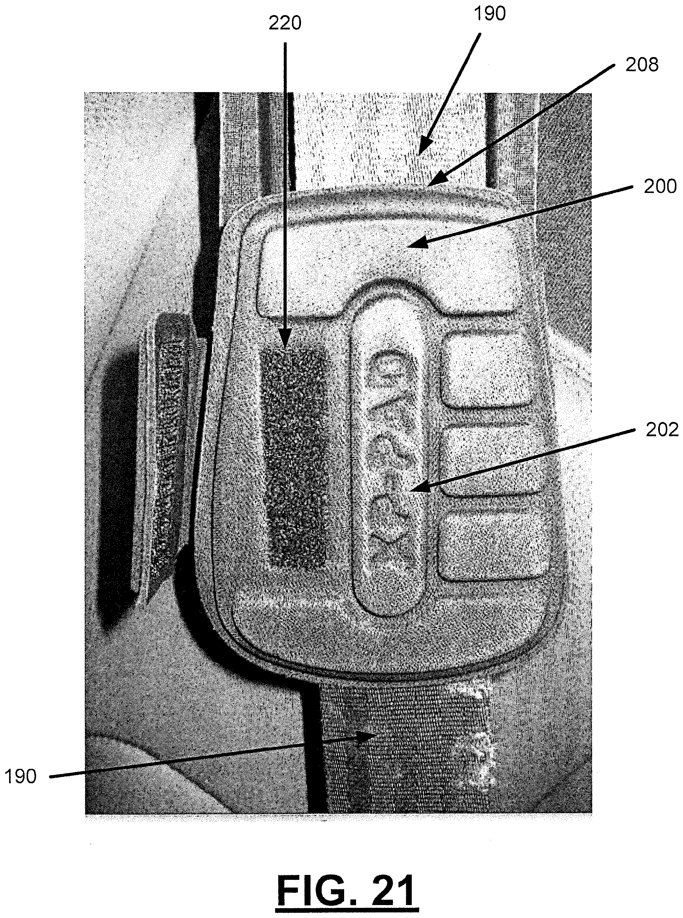

According to some embodiments, as shown in FIGs. 17A-17D, the harness guard 200 may define a front surface 202, an interior surface 204, and a rear surface 206. In some embodiments, the harness guard 200 may further define at least one harness guard slot 208. The harness guard slot 208 may be configured to receive a portion of the harness belt 190 therethrough so as to couple the harness belt to the harness guard, as shown in FIGs. 3 and 4. In another embodiment, as illustrated in FIGs. 20 and 21, the harness guard 200 may define a front surface 202 configured to be secure the harness belt 190 with the harness guard 200. In this regard, the harness guard 200 may define a front surface 202 that includes at least one securing member 220. In some embodiments, the securing member 220 may be configured to secure the harness guard 200 in an engaged state to define a harness guard slot 208 for receiving the harness belt therethrough.

Returning to FIGs. 17A-17D, the harness guard 200 may further include a longitudinal edge 216. In some embodiments, the longitudinal edge 216 may define at least one channel 217 (e.g., a receiving feature) configured to receive and engage the chest clip 30 therein. Specifically, a chest clip 30 may be shaped such that a portion of the chest clip engages the channel 217 of the longitudinal edge 216 of at least one harness guard 200. As such, when the chest clip 30 is disposed within the channel 217, the channel 217 is configured to receive the chest clip thereon and bias the chest clip 30 to remain within the channel 217.

In some embodiments, the child safety seat may comprise a first harness guard and a second harness guard (e.g., shown in FIG 1). With reference to FIGs. 17A-17D, in embodiments wherein the first and second harness guard define harness guard 200 with a respective longitudinal edge 216 and at least one channel 217 (e.g., receiving feature), the chest clip 30 may be defined to couple to respective channels of the first and second harness guards such that the first and second harness guards remain in a position relative to the harness belt and the occupant of the child safety seat during a sudden deceleration of the vehicle. Said differently, the friction between the chest clip and the channels of the longitudinal edges of the first and second harness guards may, in some cases, prevent movement of the first and second harness guards along the harness belt.

### PADDING

In some embodiments, the harness guard 200 may include padding 212, such as the padding shown in FIG. 3. The padding 212 may comprise any material designed to absorb force during an impact so as to reduce the effects of the force on the child. Additionally, the padding 212 may provide an increase in comfort for the child. Example material for the padding 212 comprises closed cell padding and/or open cell padding, among others. In the depicted embodiment, the harness guard includes a padding that comprises closed cell padding for absorbing force during an impact. The padding may be enclosed within a covering, such as a plastic covering.

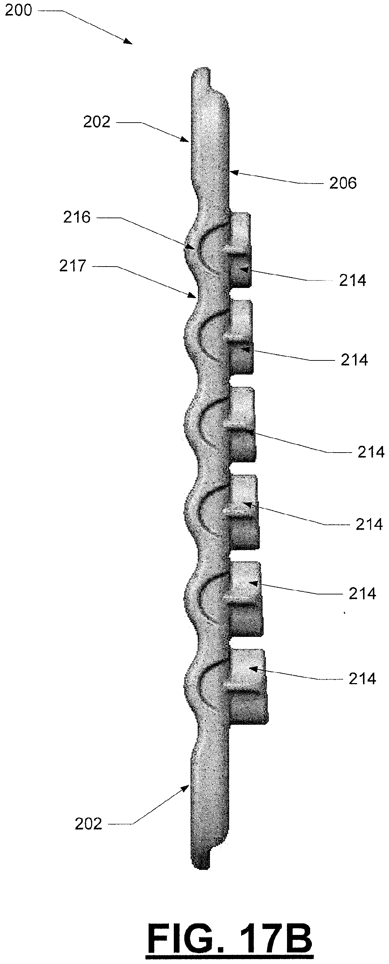

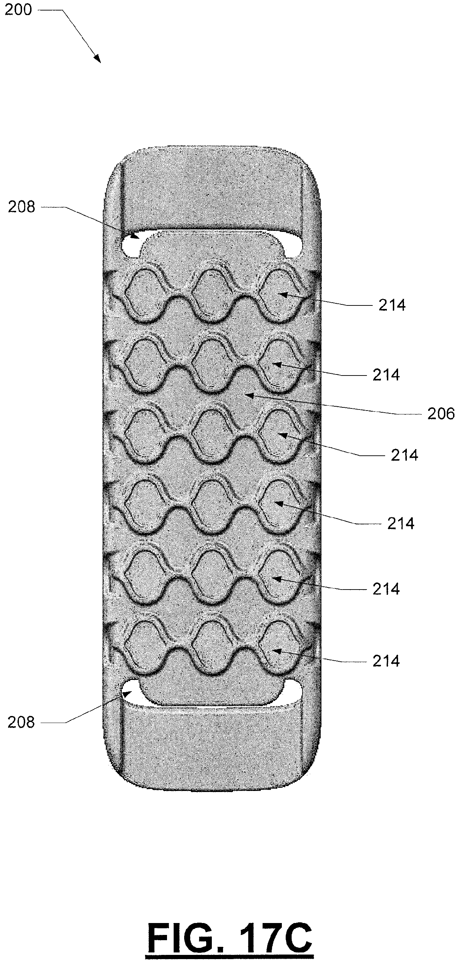

In some embodiments, the harness guard 200 may further include a rear surface 206. As shown in FIG. 17C, the rear surface 206 may define a plurality of harness guard protrusions 214 (e.g., padding) that extend from the rear surface 206. According to some embodiments, the protrusions 214 may define the padding 212. Further, in some embodiments, a first protrusion 214 may extend at a greater length from the rear surface 206 then a second protrusion, as shown in FIG. 17B. In this regard, the level of padding may increase along the longitudinal length of the harness guard 200 such as to correspond to the curvature of the occupant's shoulder on which the harness guard 200 is designed to rest.

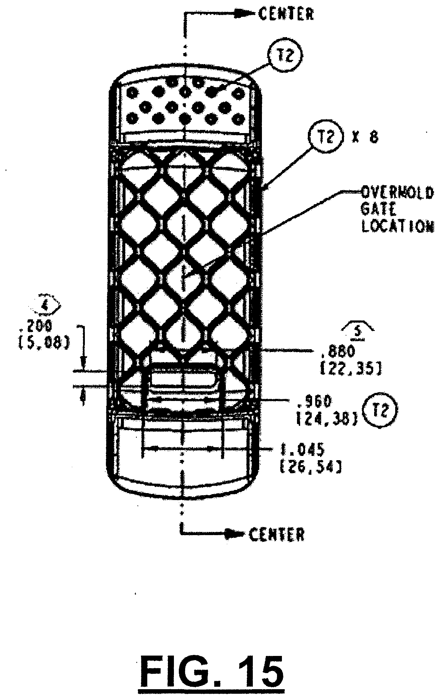

As indicated above, such padding reduces the effects of the force applied on the child due to acceleration of the child during an impact (e.g., a sudden deceleration) and the sudden stop due to the harness tensioning to stop movement of the child. In fact, some testing has shown that the padding is configured to receive a load of up to 400 Ibf during an impact. Additional information regarding an example harness guard can be seen in FIG. 15.

### HARNESS GUARD MOVEMENT

As noted above, the harness guard may slide along the harness belt. Thus, during an impact, the harness guard may slide forward (e.g., with the child). In some embodiments, the harness assembly 20 may be configured to prevent the harness guard 200 from sliding forward beyond a certain point. For example, the harness guard 200 may be configured to maintain a position along the harness belt 190 that corresponds to the desired position of the child's chest and/or shoulder during an impact. In such a manner, the child's chest and/or shoulder may be maintained in the desired position in the event of a collision.

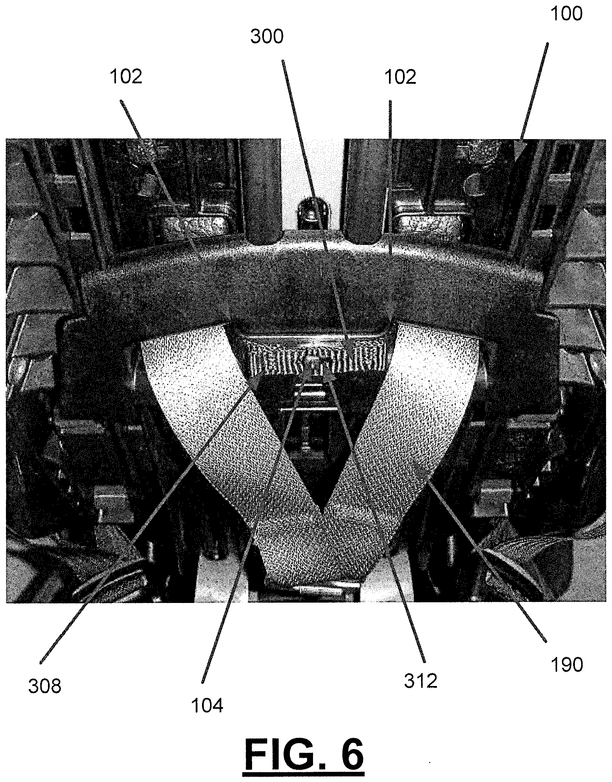

In some embodiments, the harness guard 200 may be configured to engage with a tether 300 that prevents the harness guard 200 from sliding past a predetermined position along the harness belt. For example, with reference to FIG. 3, a tether webbing 300 may be run in parallel with the harness belt 190 between the harness guard 200 and the shell 100 of the child safety seat (shown in FIG. 6), such as through a shell slot 102. The tether 300 may comprise any type of material (e.g., polyester). Additionally, the tether webbing may be configured to withstand a minimum breaking strength of 600 Ibf and demonstrate a minimum Cpk level of 1.33 for the breaking strength at the 600 Ibf requirement. Additionally, the tether webbing may be configured to elongate up to 7% at about 275 lbs.

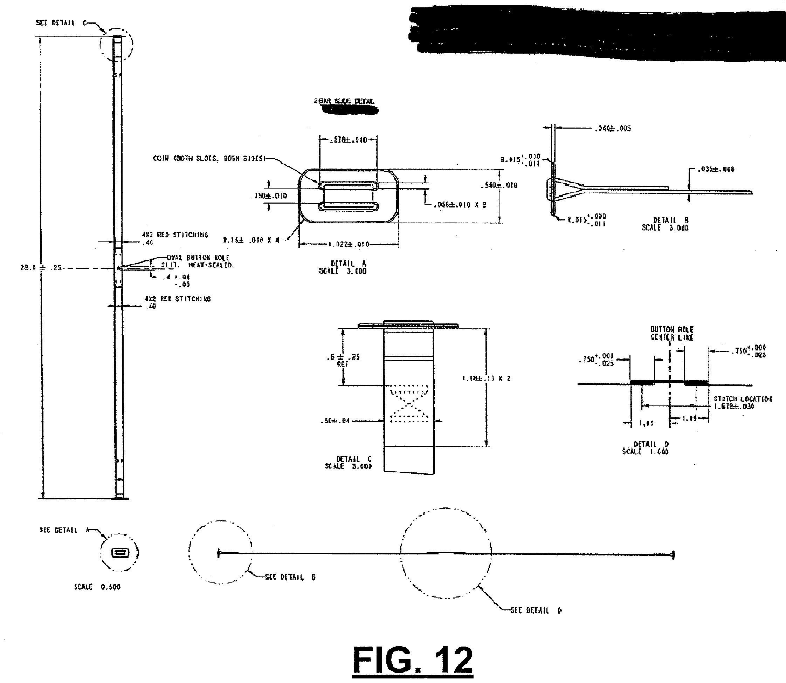

With reference to FIG. 4, the tether webbing 300 may be thread through a harness guard slot 208 (e.g., along with the harness belt). In some embodiments, the tether webbing may also be threaded through a harness guard tether slot 210. Further, in the depicted embodiment, the tether webbing 300 may comprise a tether stop 310 that is larger than the harness guard tether slot. The tether stop 310 may be a feature that prevents the tether webbing 300 from passing through the harness guard tether slot 210. For example, the tether stop 310 in the depicted embodiment comprises a 3-bar slide. The middle bar of the 3-bar slide receives a loop of the tether webbing (also shown in FIG. 12), that in some cases, may be heat sealed together. The tensile load of the 3 bar slide may be up to 400 Ibf.

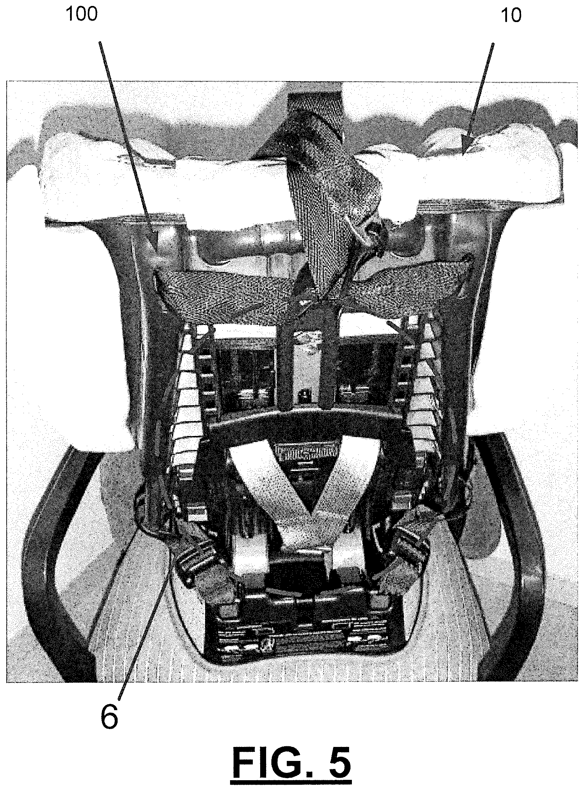

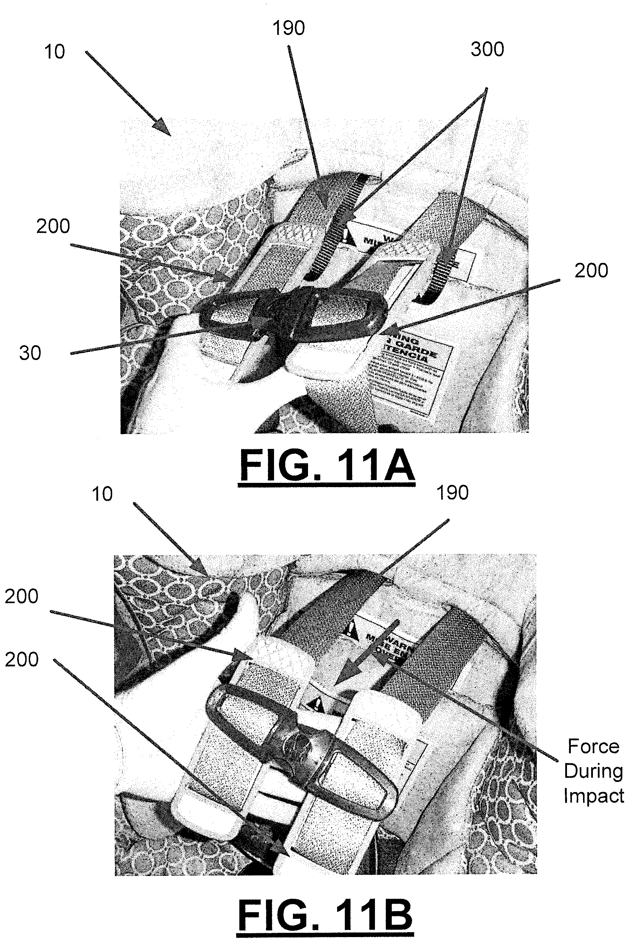

The tether webbing may extend, on the other end, through a slot in the shell of the child safety seat (e.g., the shell slot shown in FIG. 4). Thus, with reference to FIGs. 5 and 6, in some embodiments, the tether webbing 300 may extend through the shell slot 102 and out of the back of the child safety seat. Additionally, the tether webbing 300 may ultimately form a loop that extends between harness guards 200. In such a manner, the tether webbing may extend from one harness guard 200, through the shell slot 102, around the back of the child safety seat, through another shell slot 102, and to the other harness guard 200 (shown in FIGs. 11A and 11B).

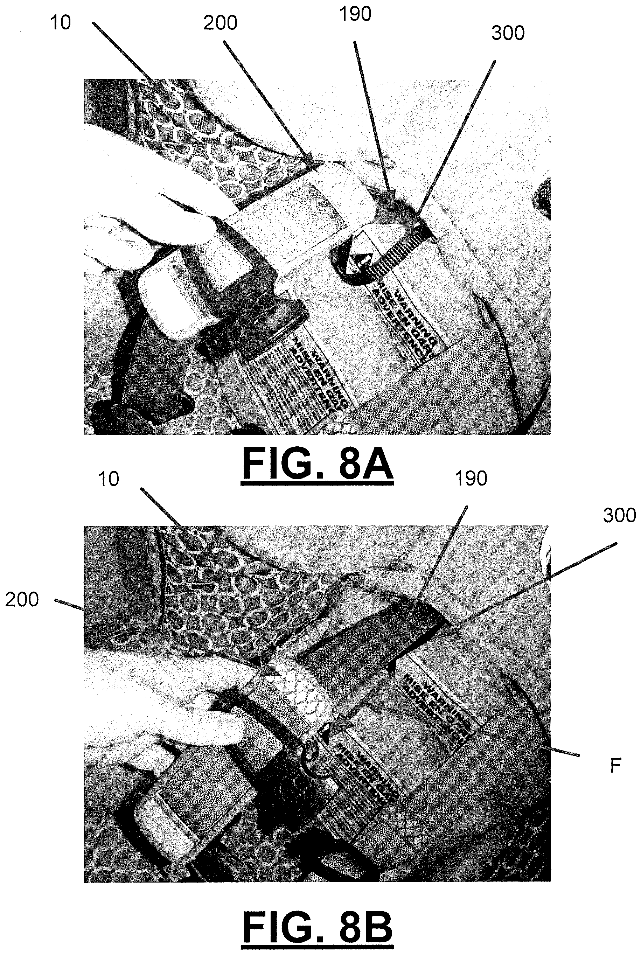

In such a regard, the loop of the tether webbing forms a defined length that ultimately prevents both harness guards from sliding out of a desired position along the harness belts. Additional detail regarding the tether may be seen in FIG. 12. With reference to FIG. 8A, the tether webbing 300 may be in an untensioned position when the harness guard 200 is slid at least partially along the harness belt toward the shell slot 102. Then, with reference to FIG. 8B, the tether webbing 300 may transition into a tensioned position when the harness guard 200 is slide along the harness belt 190 away from the shell slot 102, such as during an impact or due to some force (e.g., securing a child into the child safety seat). As shown in FIG. 8B, the tension in the tether webbing 300 and the interaction between the tether stop 310 and the harness guard tether slot 210 (shown in FIGs. 3 and 4) thereby prevents the harness guard 200 from sliding further along the harness belt 190. In such a manner, the harness guard 200 is maintained in a proper position, even in response to a force exerting on the harness guard away from the shell slot.

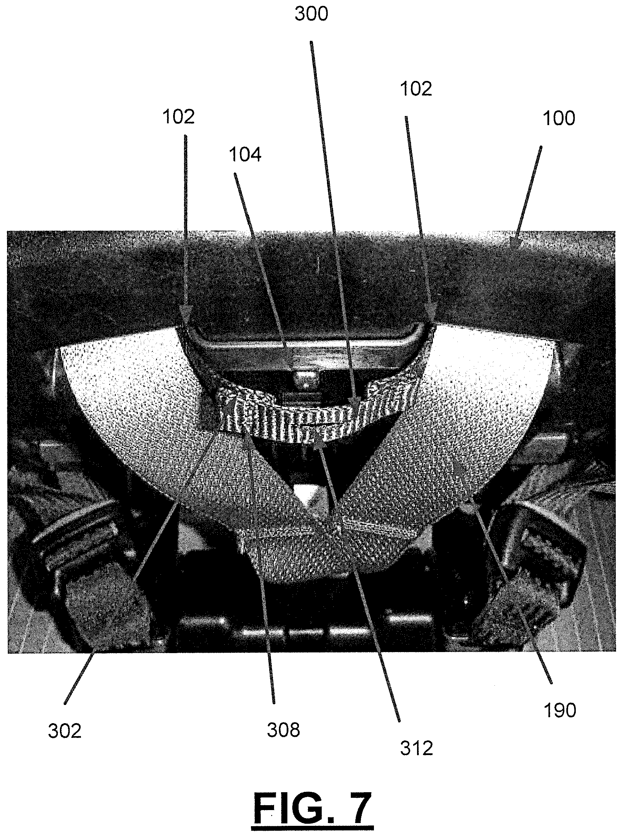

Additionally, in some embodiments the tether webbing may include a tether slot 312 that is configured to receive a tab 104 formed on the shell 100 of the child safety seat. With reference to FIG. 7, the tab 104 may define a mushroom shape that fits within the tether slot 312 and maintains the tether webbing 300 in a desired position relative to the shell slots 102.

Though the tether webbing is shown as forming one loop between two harness guards (e.g., extending from one harness guard through one shell slot around the back of the child safety seat shell and through another shell slot to the other harness guard), other embodiments of the present invention envision the tether webbing being attached directly to the shell (or other portion) of the child safety seat.

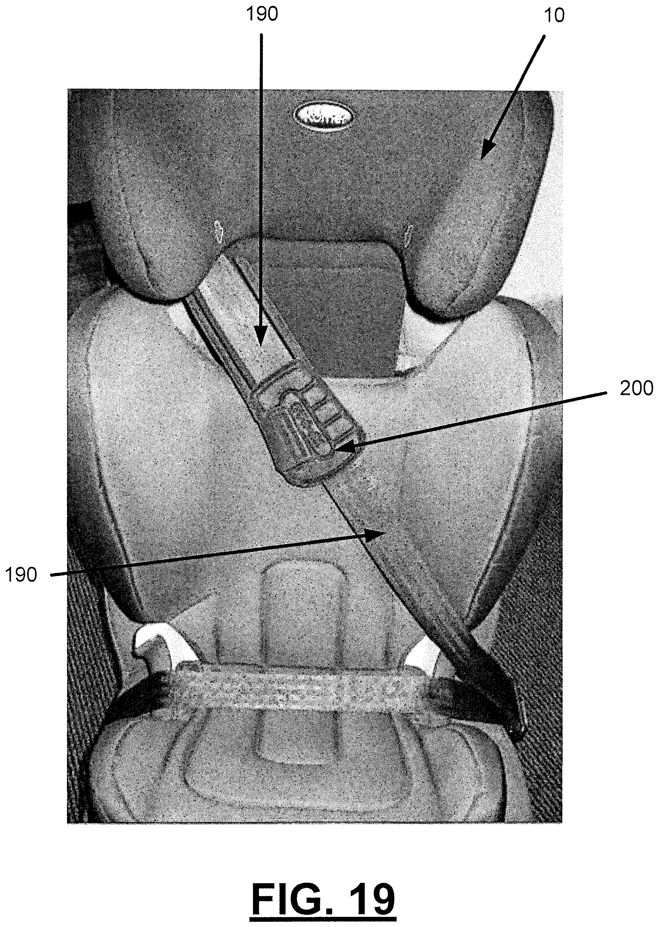

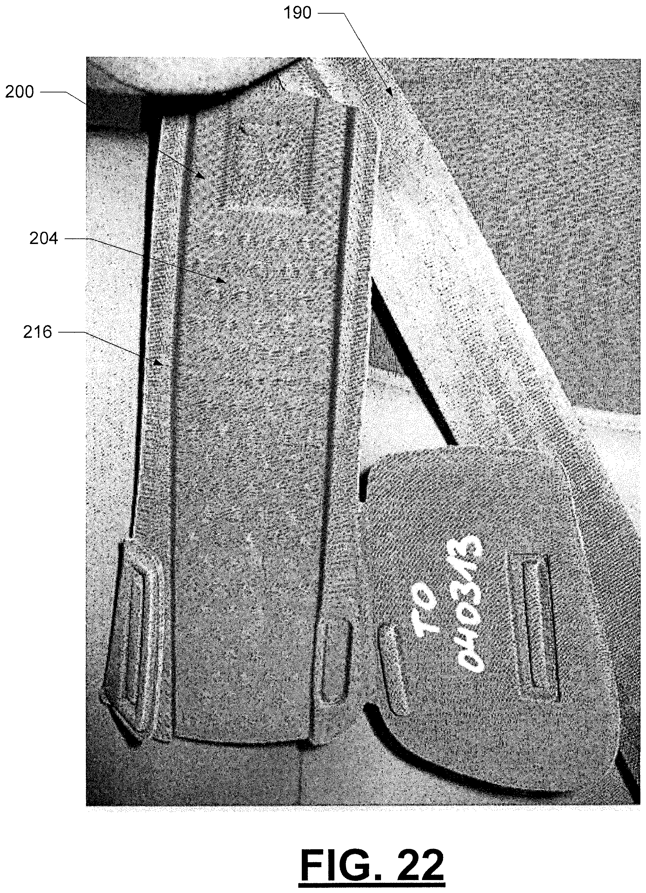

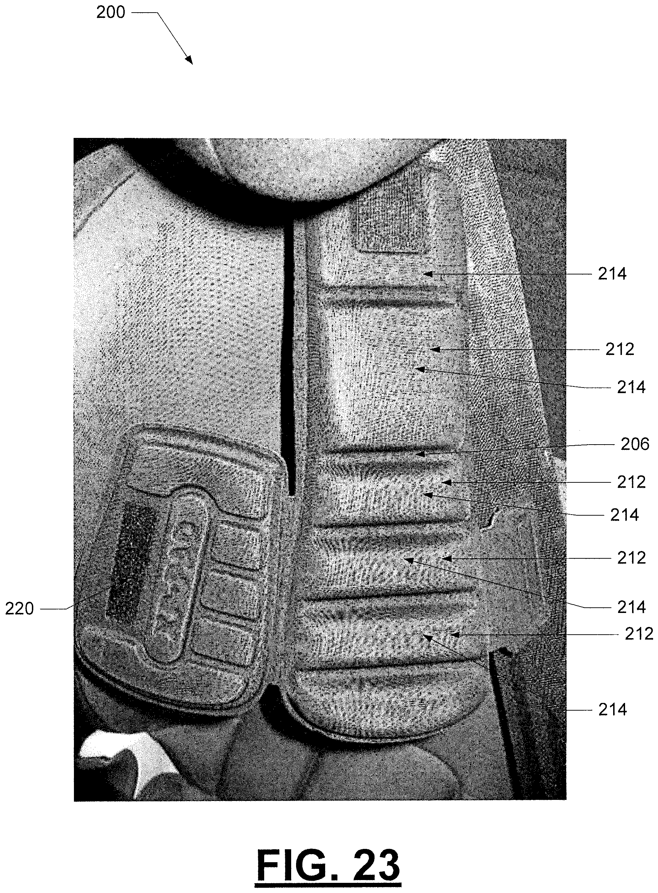

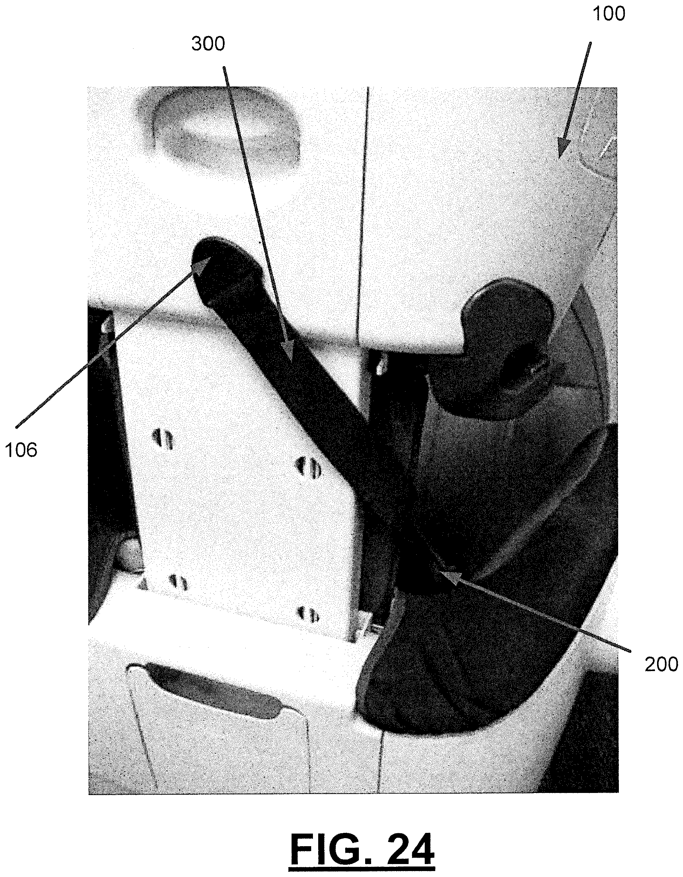

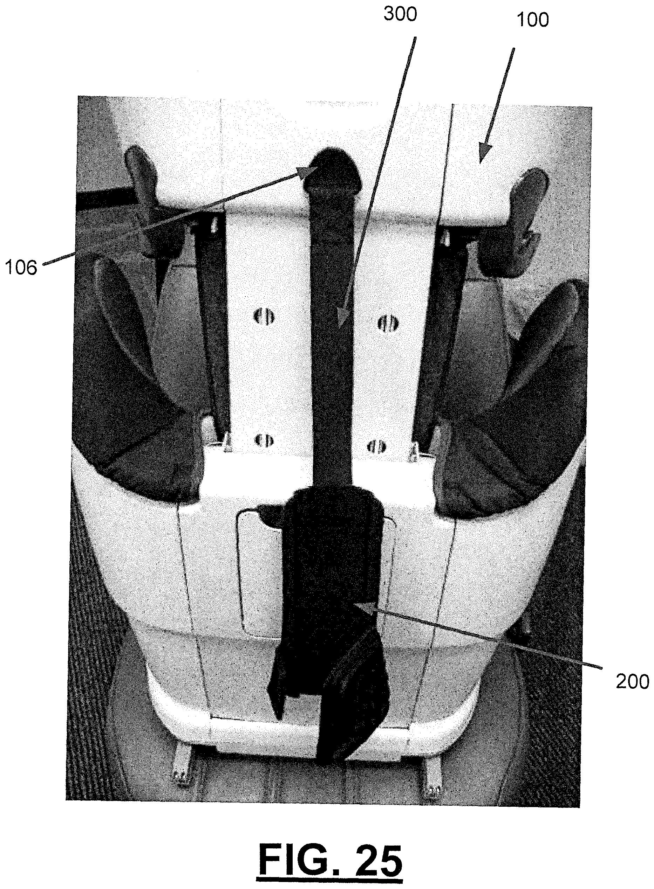

In another embodiment, as shown in FIGs. 19-25, a child safety seat 10 may include a single tether webbing 300 coupled with the harness guard 200. The tether webbing 300 may be coupled with the harness guard 200 with stitching, adhesive, and/or the like. In addition, the tether webbing 300 may be attached to the shell 100 of the child safety seat via a tether coupling 106. In some embodiments, a portion of the tether webbing 300 may be looped onto itself and around a portion of the tether coupling 106 so as to secure the tether webbing to the tether coupling. As such, a desired length of tether webbing 300 between the tether coupling 106 and the harness guard 200 may position the harness guard 200 at a desired position relative to the harness belt 190.

As previously mentioned, in some embodiments, the harness guard 200 may define a rear surface 206 defining a plurality of protrusions 214. As shown in FIGs. 17A-D, the protrusions 214 may be spaced apart longitudinally from one another. In addition, a first protrusion 214 may extend at a greater length than a second protrusion 214 from the rear surface 206, as shown in FIG. 17B. As such, the protrusions 214 may be shaped to conform to a child's chest and/or shoulders when the harness guard 200 is disposed in the desired position. Further, the spacing between the plurality of protrusions 214 may allow for the harness guard 200 to bend when an impact force is applied to the harness belt. Accordingly, the bending of the harness guard 200 may minimize movement of the harness guard with respect to the harness belt 190.

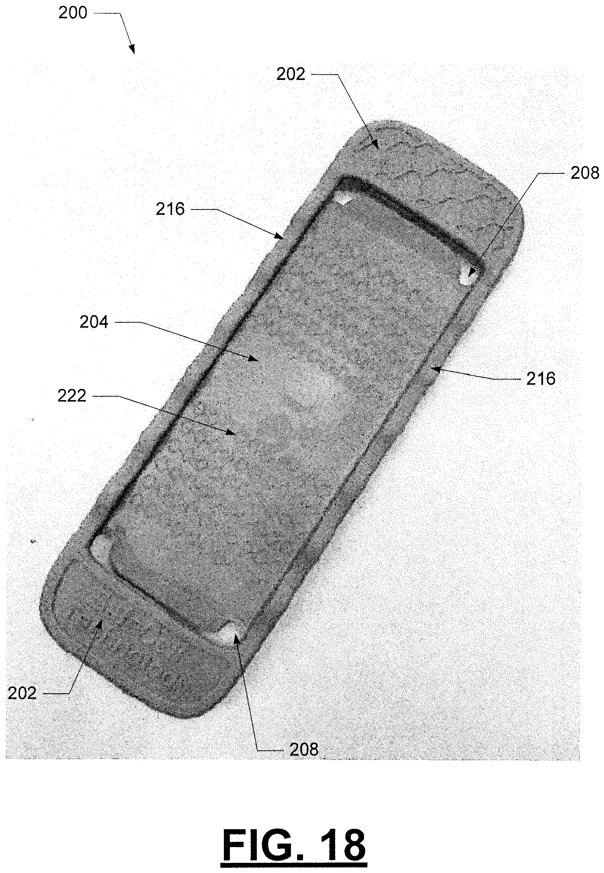

In addition, in some embodiments, the harness guard 200 may comprise a material configured to provide traction between the harness guard 200 and an occupant of the child safety seat. Likewise, the interior surface may further comprise a material configured to provide increased traction and/or friction between the harness guard 200 and the harness belt 190 so as to prevent and/or limit the movement of the harness guard with respect to the harness belt. In some embodiments, as shown in FIGs 18, the harness guard 200 may include an interior surface 204 that defines at least one interior surface protrusion 222. Accordingly, the interior surface protrusion 222 may be configured to resist and/or limit the movement of the harness belt 190 with respect to the harness guard 200 when the harness belt 190 contacts the interior surface 204 of the harness guard. The interior protrusions 222 may extend laterally across the interior surface from a first longitudinal edge 216 to a second longitudinal edge 216.

### RIP STITCH

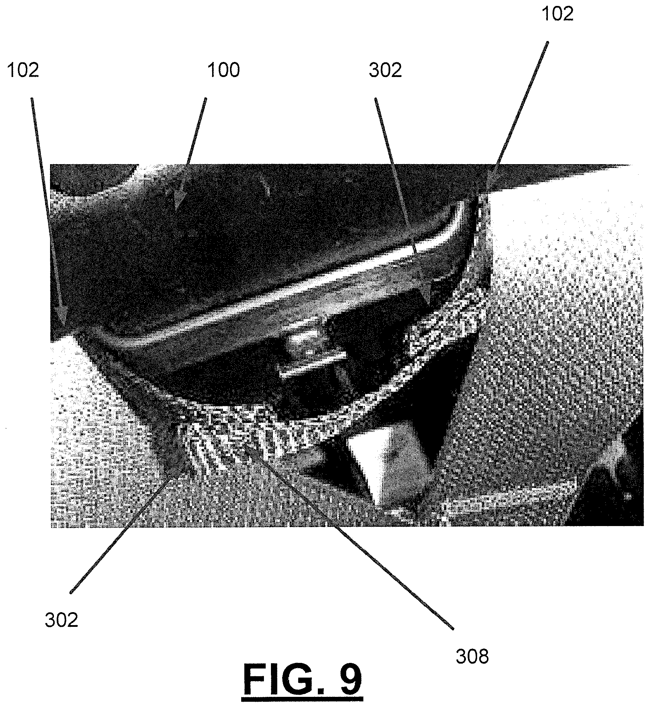

Some embodiments of the harness assembly may include further features for improving the safety of the child during an impact. In some embodiments, the harness assembly may include one or more tether folds 302 and stitches 308 to absorb and/or reduce the force transferred to the child during an impact. For example, with reference to FIG. 9, the tether webbing 300 located through the shell slot 102 and around the back of the shell 100 of the child safety seat includes two sets of tether folds, one for each shell slot and harness guard.

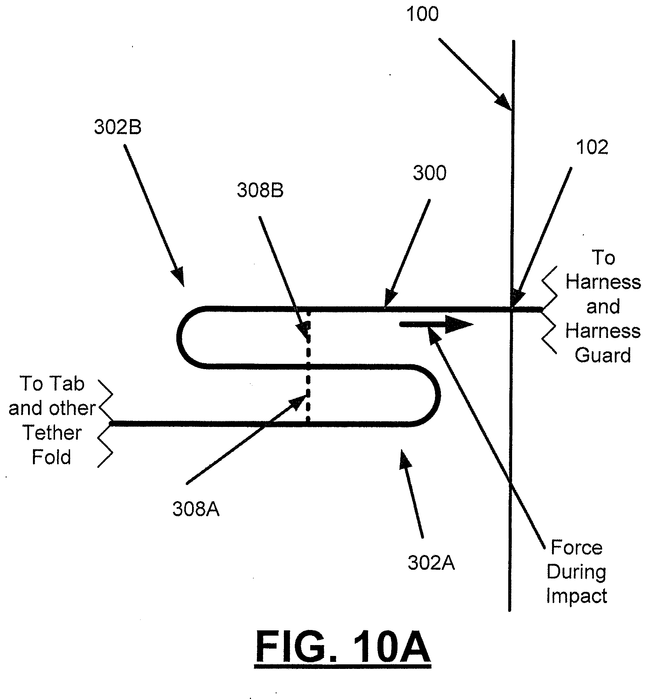

The tether fold 302 may comprise any number of folds in the tether webbing and may include any number or type of stitching to maintain those folds. Additionally, any type of thread material may be used for the stitching (e.g., nylon size 138 with bonded finish). For example, in the depicted embodiment of FIG. 9, each tether fold 302 includes 2 folds such that an "S" pattern is formed (shown in FIG. 10A). In some embodiments, the folds 302 of the tether may have a defined radius (e.g., at least 0.25 inches). Additionally, one 4x2 stitch holds the tether fold together. As noted above, however, other types of tether folds (e.g., one fold, a loop, etc.) are envisioned by embodiments of the present invention. Likewise, other types of stitching are envisioned (e.g., 3x3 stitch).

As described in greater detail herein with respect to FIGs. 10A-10D, embodiments of the present invention provide a tether fold 302 and stitching 308 to absorb part of the force of an impact and reduce the acceleration of the child during an impact. Said differently, as the impact force exerts on the harness guard 200 and the tether webbing 300, the stitching 308 will break (e.g. rip), absorb some of the impact force and slow the forward acceleration of the child during the impact. Providing more stitches and/or more folds enables a greater amount of force to be absorbed and/or results in a greater reduction in the acceleration of the child. In some embodiments, the stitches 308 are configured to break at a strength of 85 lbs. ± 40 lbs.

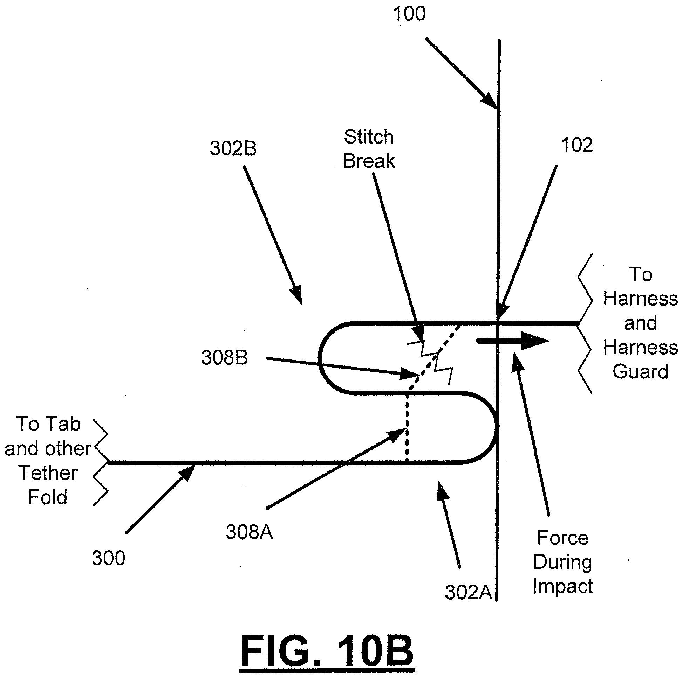

FIGs. 10A-10D illustrate an example of the designed ripping of the stitching of the tether webbing shown in FIG. 9 as a result of the force of a vehicle impact. FIG. 10A shows the tether fold of FIG. 9 with two folds 302A,302B and two corresponding stitch portions 308A,308B. During an impact (or other sudden deceleration) a force will cause the tether webbing 300 to be pulled through the shell slot 102. With reference to FIG. 10B, eventually the tether fold 302 may reach the shell 100 and/or shell slot 102. However, due to the smaller size of the shell slot 102, the tether fold 302 will be unable to pass through the shell slot. Thus, the tether webbing 300 will continue to be pulled through shell slot 102, thereby stretching the stitching 308. Ultimately, when enough force is applied, the first stitch portion 308B will break or rip to release some of the tether webbing 300 for movement through the shell slot 102. The tension in the stitch before breaking will absorb some of the force from the impact and reduce the acceleration of the child during the impact.

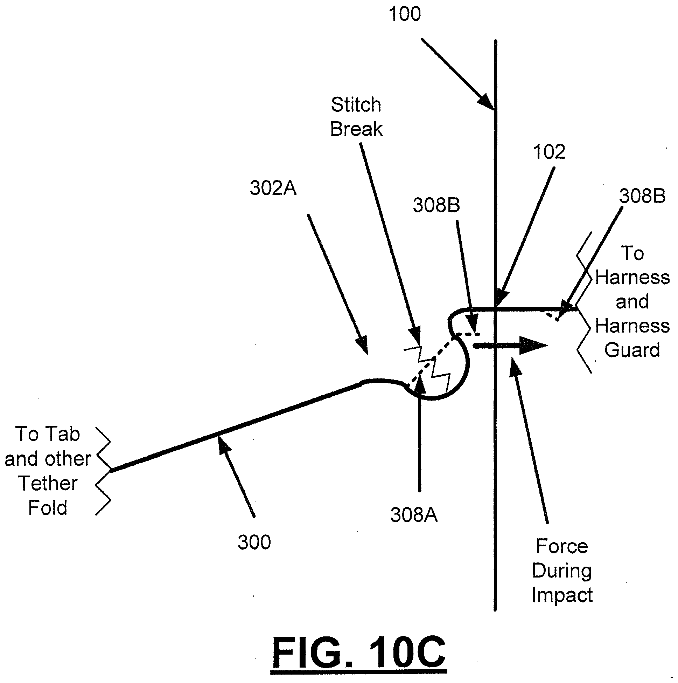

With reference to FIG. 10C, further exertion of force will cause the tether webbing 300 to be further pulled through the shell slot 102 and thereby stretch the second stitch portion 308A. Then, when enough force is applied, the second stitch portion 308A will break or rip to release the tether webbing for movement through the shell slot. Similar to the first stitch portion 308B, the tension in the second stitch portion 308A before breaking will absorb some of the force from the impact and reduce the acceleration of the child during the impact. As will be apparent to one of skill in the art in view of this disclosure, the same process will occur with the other tether fold and other harness guard at the same (or similar) time (e.g., in response to the same force). Thus, both sets of tether folds 302 and stitching 308 will help absorb part of the force of an impact and reduce the acceleration of the child during an impact.

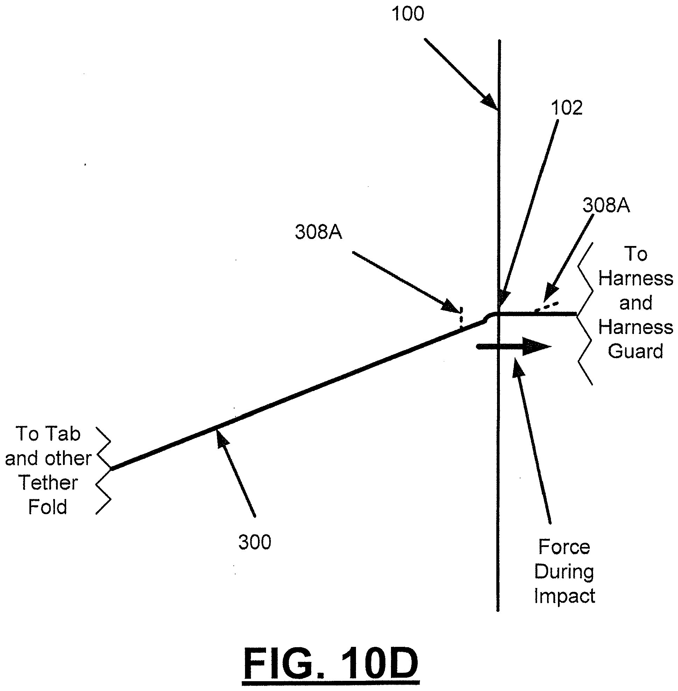

Then, once the stitching has been ripped, the tether webbing 300 will be fully tensioned (shown in FIG. 10D). Thus, the harness guards 200 will be prevented from sliding further along the harness belt 190 as the tether webbing 300 is secured to the child safety seat shell 100 with the tether tab 104, thereby ensuring that the harness guards remain in a proper position to help ensure the child's safety during an impact.

FIGs. 11A-11B further illustrate the tensioning that the tether webbing 300 and the harness guards 200 undergo from application of a force, such as during an impact. FIG. 11A shows the harness attached at the chest clip. Both harness guards are disposed along the harness belt such that the tether webbing is untensioned. With reference to FIG. 11B, during application of a force, such as from an impact, the harness guards will slide downward along the harness belts. However, as is consistent with the disclosure herein, the tether webbing will become tensioned and prevent the harness guards from sliding further along the harness belt. Additionally, in some embodiments, if a great enough force is applied, the stitching on the tether folds (see e.g., FIGs. 6 and 9) may break (or rip) to absorb some of the force and reduce the acceleration rate of the child (and harness guards) during the impact.

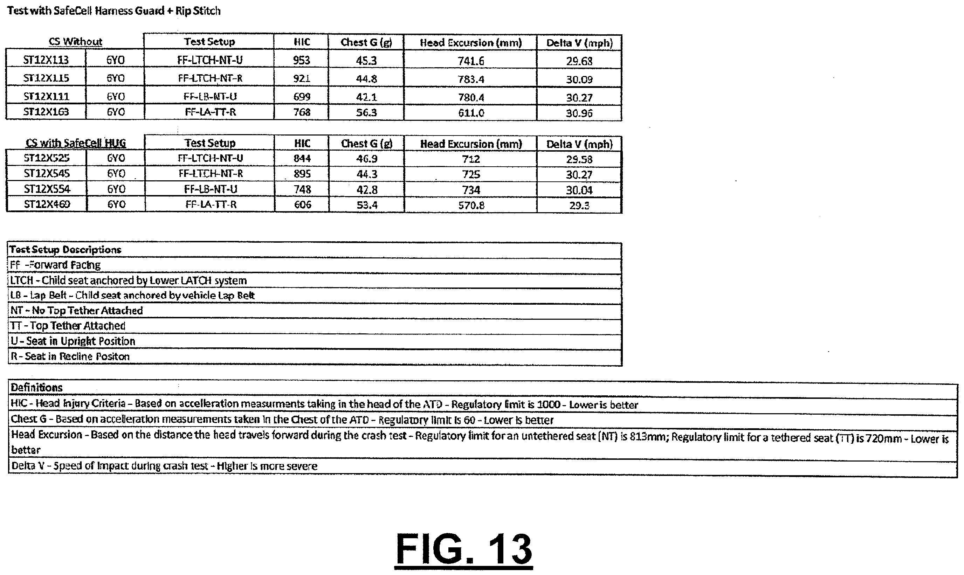

Current testing has shown that child safety seats that employ example embodiments of the harness guard safety system, as described herein, as compared to child safety seats without the harness guard safety system, have reduced the effects of the force of the impact on the child. For example, with reference to FIG. 13, testing between a child safety seat with the harness guard safety system and a child safety seat without a harness guard safety system has shown a decrease in head injury criteria ("HIC"), g forces on the child's chest ("Chest G"), and head excursion. As used herein HIC is an industry defined term that is based on acceleration measurements of the child's head over a given period of time. Chest G defines the amount of g force exerted on a child during the impact. Head excursion is the distance (in mm) the child's head travels during the impact.

For example, a child safety seat without the system that was tested at a sudden drop of 30.09 mph measured a HIC value of 921, a Chest G value of 44.8, and a Head Excursion value of 783.4. In contrast a similarly situated child safety seat with the harness guard safety system that was tested at a sudden drop of 30.27 mph measured a HIC value of 895, a Chest G value of 44.3, and a Head Excursion value of 725. This shows a drop in HIC value of 26, Chest G value of 0.5, and Head Excursion value of 58.4. Indeed testing shows a ranges of drops in value of similarly tested child safety seats (with and without the system) of 26 - 162 for the HIC value, up to 2.9 for the Chest G value, and 29.6 - 58.4 for the Head Excursion value.

Many modifications and other embodiments of the invention set forth herein will come to mind to one skilled in the art to which the invention pertains having the benefit of the teachings presented in the foregoing descriptions and the associated drawings. Therefore, it is to be understood that the invention is not to be limited to the specific embodiments disclosed.

## Claims

1. A child safety seat (10) for securement to a vehicle, the child safety seat (10) comprising:
a child safety seat shell (100);
a harness belt (190);
a harness guard (200) configured to receive a portion of the harness belt (190) therethrough, and defining a padding (212) configured to contact an occupant of the child safety seat (10) and absorb energy resulting from a sudden deceleration of the vehicle;
a tether webbing (300); and
a tether stop (310) securing the tether webbing (300) to the harness guard (200),
wherein the tether webbing (300) and tether stop (310) retain the harness guard (200) in a position relative to the harness belt (190) and the occupant of the child safety seat (10) during sudden deceleration of the vehicle.

2. The child safety seat (10) of Claim 1, wherein the harness guard (200) defines:
a front surface (202),
an interior surface (204), and
a rear surface (206),
wherein the rear surface (206) defines the padding (212).

3. The child safety seat (10) of Claim 2, wherein the padding (212) defines a plurality of protrusions (214) that extend from the rear surface (206) of the harness guard (200), and wherein at least one protrusion (214) is spaced apart from at least one second protrusion (214).

4. The child safety seat (10) of Claim 1, wherein the child safety seat shell (100) defines:
a seat portion configured to receive the occupant thereon; and
a back portion extending upwardly from an edge of the seat portion, the back portion defining a front surface and a rear surface, the front surface being configured to receive the occupant of the child safety seat (10), and
wherein the tether webbing (300) is secured to the rear surface of the back portion such that the harness guard (200) is fixed in the position relative to the harness belt (190) and the occupant of the child safety seat (10).

5. The child safety seat (10) of Claim 1, wherein the child safety seat shell (100) defines:
a seat portion configured to receive the occupant thereon; and
a back portion extending upwardly from an edge of the seat portion, the back portion defining a front surface and a rear surface, the front surface being configured to receive the occupant of the child safety seat (10), and
wherein the child safety seat (10) further comprises a second harness guard (200) configured to receive a portion of the harness belt (190) therethrough, wherein the tether webbing (300) is configured to extend through the back portion between the first harness guard (200) and the second harness guard (200) such that the first harness guard (200) and the second harness guard (200) are each fixed in the position relative to the harness belt (190) and the occupant of the child safety seat (10).

6. The child safety seat (10) of Claim 5, wherein the back portion of the child safety seat shell (100) further defines at least one shell slot (102) configured to receive the harness belt (190) and tether webbing (300) therethrough.

7. The child safety seat (10) of Claim 6, wherein the tether webbing (300) further defines at least one tether fold (302), the tether fold (302) being disposed along the tether webbing (300) at a position beyond the shell slot (102) of the back portion of the child safety seat shell (100) and opposite the harness guard (200).

8. The child safety seat (10) of Claim 7, wherein the at least one tether fold (302) comprises a first portion of the tether webbing (300) secured to at least a second portion of the tether webbing (300), the first portion and second portion of the tether webbing (300) being secured by at least one rip stitch.

9. The child safety seat (10) of Claim 8, wherein the rip stitch is configured to rip from interaction with the shell slot (102) to absorb energy resulting during sudden deceleration of the vehicle.

10. The child safety seat (10) of Claim 1, wherein the harness guard (200) defines a harness guard tether slot (210), wherein the harness guard tether slot (210) is configured to receive the tether webbing (300) therethrough and prohibit the tether stop (310) from moving through the harness guard tether slot (210).

11. The child safety seat (10) of any one of the preceding claims further comprising a chest clip (30);
wherein the harness guard (200) defines at least one receiving feature (217) that is configured to interact with the chest clip (30) such that the harness guard (200) remains in a position relative to the harness belt (190) and an occupant of the child safety seat (10) during sudden deceleration of the vehicle.

12. The child safety seat (10) of Claim 11, wherein the child safety seat (10) comprises a second harness guard (200), and wherein the chest clip (30) is configured to couple respective receiving features (217) of the first harness guard (200) and the second harness guard (200).

13. The child safety seat (10) of Claim 12, wherein the first and second harness guard (200) each define:
at least one longitudinal edge (216),
a front surface (202),
an interior surface (204), and
a rear surface (206),
wherein the rear surface (206) defines a padding (212) configured to contact an occupant of the child safety seat (10) and absorb energy resulting from the sudden deceleration of the vehicle, and
wherein the at least one longitudinal edge (216) defines a plurality of receiving features (217), and wherein each receiving feature (217) defines a channel (217) configured to receive and bias the chest clip (30) within the respective receiving feature (217).

## Patentansprüche

1. Kindersitz (10) zur Befestigung an einem Fahrzeug, wobei der Kindersitz (10) aufweist:
eine Kindersitzschale (100);
einen Sicherheitsgurt (190);
einen Gurtschutz (200), der dazu konfiguriert ist, einen Abschnitt des Sicherheitsgurts (190) durch ihn hindurch aufzunehmen, und eine Polsterung (212) definiert, die dazu konfiguriert ist, einen Insassen des Kindersitzes (10) zu kontaktieren und Energie, die aus einem plötzlichen Abbremsen des Fahrzeugs resultiert, zu absorbieren;
ein Haltegurtgewebe (300); und
einen Haltegurtanschlag (310), der das Haltegurtgewebe (300) an dem Gurtschutz (200) sichert,
wobei das Haltegurtgewebe (300) und der Haltegurtanschlag (310) während eines plötzlichen Abbremsens des Fahrzeugs den Gurtschutz (200) bezüglich des Sicherheitsgurts (190) und des Insassens des Kindersitzes (10) in einer Position zurückhalten.

2. Kindersitz (10) nach Anspruch 1, wobei der Gurtschutz (200) definiert:
eine vordere Fläche (202),
eine Innenfläche (204), und
eine hintere Fläche (206),
wobei die hintere Fläche (206) die Polsterung (212) definiert.

3. Kindersitz (10) nach Anspruch 2, wobei die Polsterung (212) eine Vielzahl von Vorsprüngen (214) definiert, die sich von der hinteren Fläche (206) des Gurtschutzes (200) erstrecken, und wobei wenigstens ein Vorsprung (214) von wenigstens einem zweiten Vorsprung (214) beabstandet ist.

4. Kindersitz (10) nach Anspruch 1, wobei die Kindersitzschale (100) definiert:
einen Sitzabschnitt, der dazu konfiguriert ist, den Insassen darauf aufzunehmen; und
einen Rückenabschnitt, der sich von einer Kante des Sitzabschnitts nach oben erstreckt, wobei der Rückenabschnitt eine vordere Fläche und eine hintere Fläche definiert, wobei die vordere Fläche dazu konfiguriert ist, den Insassen des Kindersitzes (10) aufzunehmen, und
wobei das Haltegurtgewebe (300) an der hinteren Fläche des Rückenabschnitts derart befestigt ist, dass der Gurtschutz (200) bezüglich des Sicherheitsgurts (190) und des Insassens des Kindersitzes (10) in der Position fixiert ist.

5. Kindersitz (10) nach Anspruch 1, wobei die Kindersitzschale (100) definiert:
einen Sitzabschnitt, der dazu konfiguriert ist, den Insassen darauf aufzunehmen; und
einen Rückenabschnitt, der sich von einer Kante des Sitzabschnittes nach oben erstreckt, wobei der Rückenabschnitt eine vordere Fläche und eine hintere Fläche definiert, wobei die vordere Fläche dazu konfiguriert ist, den Insassen des Kindersitzes (10) aufzunehmen, und
wobei der Kindersitz (10) des Weiteren einen zweiten Gurtschutz (200) aufweist, der dazu konfiguriert ist, einen Abschnitt des Sicherheitsgurts (190) durch ihn hindurch aufzunehmen, wobei das Haltegurtgewebe (300) dazu konfiguriert ist, sich zwischen dem ersten Gurtschutz (200) und dem zweiten Gurtschutz (200) durch den Rückenabschnitt zu erstrecken, so dass der erste Gurtschutz (200) und der zweite Gurtschutz (200) jeweils bezüglich des Sicherheitsgurts (190) und des Insassens des Kindersitzes (10) in der Position fixiert sind.

6. Kindersitz (10) nach Anspruch 5, wobei der Rückenabschnitt der Kindersitzschale (100) des Weiteren wenigstens einen Schalenschlitz (102) definiert, der dazu konfiguriert ist, den Sicherheitsgurt (190) und das Haltegurtgewebe (300) durch ihn hindurch aufzunehmen.

7. Kindersitz (10) nach Anspruch 6, wobei das Haltegurtgewebe (300) des Weiteren wenigstens eine Haltegurtfalte (302) definiert, wobei die Haltegurtfalte (302) entlang des Haltegurtgewebes (300) an einer Position jenseits des Schalenschlitzes (102) des Rückenabschnitts der Kindesitzschale (100) und gegenüber dem Gurtschutz (200) angeordnet ist.

8. Kindersitz (10) nach Anspruch 7, wobei die wenigstens eine Haltegurtfalte (302) einen ersten Abschnitt des Haltegurtgewebes (300) aufweist, der an wenigstens einem zweiten Abschnitt des Haltegurtgewebes (300) befestigt ist, wobei der erste Abschnitt und der zweite Abschnitt des Haltegurtgewebes (300) durch wenigstens einen Aufreiß-Stich befestigt sind.

9. Kindersitz (10) nach Anspruch 8, wobei der Aufreiß-Stich dazu konfiguriert ist, aufgrund von Interaktion mit dem Schalenschlitz (102) aufzureißen, um Energie, die während eines plötzlichen Abbremsens des Fahrzeugs resultiert, zu absorbieren.

10. Kindersitz (10) nach Anspruch 1, wobei der Gurtschutz (200) einen Gurtschutz-Haltegurtschlitz (210) definiert, wobei der Gurtschutz-Haltegurtschlitz (210) dazu konfiguriert ist, das Haltegurtgewebe (300) durch ihn hindurch aufzunehmen und zu verhindern, dass sich der Haltegurtanschlag (310) durch den Gurtschutz-Haltegurtschlitz (210) hindurch bewegt.

11. Kindersitz (10) nach einem der vorhergehenden Ansprüche, der des Weiteren eine Brustklammer (30) aufweist;
wobei der Gurtschutz (200) wenigstens ein Aufnahmemerkmal (217) definiert, das dazu konfiguriert ist, mit der Brustklammer (30) derart zu interagieren, dass der Gurtschutz (200) während eines plötzlichen Abbremsens des Fahrzeugs bezüglich des Sicherheitsgurts (190) und eines Insassens des Kindersitzes (10) in einer Position bleibt.

12. Kindersitz (10) nach Anspruch 11, wobei der Kindersitz (10) einen zweiten Gurtschutz (200) aufweist, und wobei die Brustklammer (30) dazu konfiguriert ist, jeweilige Aufnahmemerkmale (217) des ersten Gurtschutzes (200) und des zweiten Gurtschutzes (200) zu verbinden.

13. Kindersitz (10) nach Anspruch 12, wobei der erste und der zweite Gurtschutz (200) jeweils definieren:
wenigstens eine Längskante (216),
eine vordere Fläche (202),
eine Innenfläche (204), und
eine hintere Fläche (206),
wobei die hintere Fläche (206) eine Polsterung (212) definiert, die dazu konfiguriert ist, einen Insassen des Kindersitzes (10) zu kontaktieren und Energie, die aus dem plötzlichen Abbremsen des Fahrzeugs resultiert, zu absorbieren, und
wobei die wenigstens eine Längskante (216) eine Vielzahl von Aufnahmemerkmalen (217) definiert, und wobei jedes Aufnahmemerkmal (217) einen Kanal (217) definiert, der dazu konfiguriert ist, die Brustklammer (30) in dem jeweiligen Aufnahmemerkmal (217) aufzunehmen und vorzuspannen.

## Revendications

1. Siège de sécurité enfant (10) destiné à une fixation à un véhicule, le siège de sécurité enfant (10) comprenant :
une coque du siège de sécurité enfant (100) ;
une ceinture harnais (190) ;
un protège harnais (200) conçu pour recevoir une partie de la ceinture harnais (190) à travers celui-ci, et présentant un rembourrage (212) conçu pour entrer en contact avec un occupant du siège de sécurité enfant (10) et absorber l'énergie entraînée par une soudaine décélération du véhicule ;
une sangle d'attache (300) ; et
une butée d'attache (310) fixant la sangle d'attache (300) au protège harnais (200),
dans lequel la sangle d'attache (300) et la butée d'attache (310) retiennent le protège harnais (200) dans une position par rapport à la ceinture harnais (190) et l'occupant du siège de sécurité enfant (10) pendant une soudaine décélération du véhicule.

2. Siège de sécurité enfant (10) selon la revendication 1, dans lequel la ceinture harnais (200) présente :
une surface avant (202),
une surface intérieure (204), et
une surface arrière (206),
dans lequel la surface arrière (206) présente le rembourrage (212).

3. Siège de sécurité enfant (10) selon la revendication 2, dans lequel le rembourrage (212) présente une pluralité de protubérances (214) qui s'étendent à partir de la surface arrière (206) du protège harnais (200), et dans lequel au moins une protubérance (214) est espacée d'au moins une seconde protubérance (214).

4. Siège de sécurité enfant (10) selon la revendication 1, dans lequel la coque du siège de sécurité enfant (100) présente :
une partie de siège conçue pour recevoir l'occupant sur celle-ci ; et
une partie de dossier s'étendant vers le haut à partir d'un bord de la partie du siège, la partie de dossier présentant une surface avant et une surface arrière, la surface avant étant conçue pour recevoir l'occupant du siège de sécurité enfant (10), et
dans lequel la sangle d'attache (300) est fixée à la surface arrière de la partie de dossier de telle sorte que le protège harnais (200) est fixé dans la position par rapport à la ceinture harnais (190) et à l'occupant du siège de sécurité enfant (10).

5. Siège de sécurité enfant (10) selon la revendication 1, dans lequel la coque du siège de sécurité enfant (100) présente :
une partie de siège conçue pour recevoir l'occupant sur celle-ci ; et
une partie de dossier s'étendant vers le haut à partir d'un bord de la partie du siège, la partie de dossier présentant une surface avant et une surface arrière, la surface avant étant conçue pour recevoir l'occupant du siège de sécurité enfant (10), et
dans lequel le siège de sécurité enfant (10) comprend en outre un second protège harnais (200) conçu pour recevoir une partie de la ceinture harnais (190) à travers celui-ci, dans lequel la sangle d'attache (300) est conçue pour s'étendre à travers la partie de dossier entre le premier protège harnais (200) et le second protège harnais (200) de telle sorte que le premier protège harnais (200) et le second protège harnais (200) sont fixés chacun dans la position par rapport à la ceinture harnais (190) et à l'occupant du siège de sécurité enfant (10).

6. Siège de sécurité enfant (10) selon la revendication 5, dans lequel la partie de dossier de la coque du siège de sécurité enfant (100) présente en outre au moins une fente de coque (102) conçue pour recevoir la ceinture harnais (190) et la sangle d'attache (300) à travers celle-ci.

7. Siège de sécurité enfant (10) selon la revendication 6, dans lequel la sangle d'attache (300) présente en outre au moins un pli d'attache (302), le pli d'attache (302) étant disposé le long de la sangle d'attache (300) au niveau d'une position au-delà de la fente de la coque (102) de la partie de dossier de la coque du siège de sécurité enfant (100) et opposé au protège harnais (200).

8. Siège de sécurité enfant (10) selon la revendication 7, dans lequel l'au moins un pli d'attache (302) comprend une première partie de la sangle d'attache (300) fixée à au moins une seconde partie de la sangle d'attache (300), la première partie et la seconde partie de la sangle d'attache (300) étant fixées par au moins une couture déchirable.

9. Siège de sécurité enfant (10) selon la revendication 8, dans lequel la couture déchirable est conçue pour se déchirer à partir d'une interaction avec la fente de la coque (102) pour absorber l'énergie entraînée pendant une soudaine décélération du véhicule.

10. Siège de sécurité enfant (10) selon la revendication 1, dans lequel le protège harnais (200) présente une fente d'attache (210) de protège harnais, dans lequel la fente d'attache (210) de protège harnais est conçue pour recevoir la sangle d'attache (300) à travers celle-ci et empêcher la butée d'attache (310) de se déplacer à travers la fente d'attache de protège harnais (210).

11. Siège de sécurité enfant (10) selon l'une quelconque des revendications précédentes, comprenant en outre une attache de poitrine (30) ;
dans lequel le protège harnais (200) présente au moins un élément de réception (217) qui est conçu pour interagir avec l'attache de poitrine (30) de telle sorte que le protège harnais (200) reste dans une position par rapport à la ceinture harnais (190) et à un occupant du siège de sécurité enfant (10) pendant une soudaine décélération du véhicule.

12. Siège de sécurité enfant (10) selon la revendication 11, dans lequel le siège de sécurité enfant (10) comprend un second protège harnais (200) et dans lequel l'attache de poitrine (30) est conçue pour relier les éléments de réception respectifs (217) du premier protège harnais (200) et du second protège harnais (200).

13. Siège de sécurité enfant (10) selon la revendication 12, dans lequel le premier et le second protège harnais (200) présentent chacun :
au moins un bord longitudinal (216),
une surface avant (202),
une surface intérieure (204), et
une surface arrière (206),
dans lequel la surface arrière (206) présente un rembourrage (212) conçu pour entrer en contact avec un occupant du siège de sécurité enfant (10) et absorber l'énergie entraînée par une soudaine décélération du véhicule, et
dans lequel l'au moins un bord longitudinal (216) présente une pluralité d'éléments de réception (217), et dans lequel chaque élément de réception (217) présente un canal (217) conçu pour recevoir et solliciter l'attache de poitrine (30) à l'intérieur de l'élément de réception respectif (217).
